# EUROPÄISCHE PATENTSCHRIFT

(11) **EP 0 943 420 B1**
(45) Veröffentlichungstag und Bekanntmachung des Hinweises auf die Patenterteilung: **15.01.2003**
(21) Anmeldenummer: 99104571.7
(22) Anmeldetag: 08.03.1999
(51) Int. Cl.: B29C 69/00, B29C 49/00, B65D 1/16, B65D 43/08

(54) **Verfahren zur Herstellung von Spundfässern und Deckelfässern aus Kunststoff und Verfahren zum Rekonditionieren von Spundfässern**
Method for manufacturing plastic bunghole barrels and lid covered barrels and method for reconditioning of bunghole barrels
Procédé pour la production de bondes et de fûts à couvercle en matière plastique et procédé pour le reconditionnement de bondes

(30) Priorität: 17.03.1998 DE 19811414
(43) Veröffentlichungstag der Anmeldung: 22.09.1999
(73) Patentinhaber: Schütz GmbH & Co. KGaA, 56242 Selters (DE)
(72) Erfinder: Schütz, Udo, 56242 Selters (DE)
(74) Vertreter: Pürckhauer, Rolf, Dipl.-Ing.

(56) Entgegenhaltungen:
- EP-A- 0 320 151
- EP-A- 0 704 379
- WO-A-93/03971
- WO-A-96/08416
- DE-A- 2 021 118
- DE-A- 3 332 769
- DE-A- 4 437 748
- DE-U- 29 612 506
- GB-A- 2 137 158

## Beschreibung

Die Erfindung betrifft ein Verfahren zum Rekonditionieren von Spundfässern aus Kunststoff zu Deckelfässern.

Aus der DE 91 10 012.7 U1 bekannte Spundfässer und Deckelfässer gemäß der DE 295 21 283 U1 mit einem oberen, für das Ansetzen eines Faßgreifers ausgebildeten Tragring, der ein L-förmiges Querschnittsprofil aufweist, werden auf Blasformmaschinen hergestellt, die mit einer für den jeweils zu fertigenden Faßtyp konstruierten Blasform ausgerüstet sind. Eine derartige Fertigung erfordert eine entsprechende Anzahl von Blasformmaschinen mit hohen Investitionskosten.

Ferner besteht die Möglichkeit, beide Faßtypen auf einer Blasformmaschine zu fertigen. Dies erfordert jedoch, daß die Blasformmaschine auf den jeweiligen Faßtyp umgerüstet werden muß. Die Umrüstung der Blasformmaschine führt zusätzlich zu den reinen Herstellungskosten zu weiteren Kosten, die durch Stillstandszeiten der Maschine und Montagearbeiten entstehen.

Die strengen gesetzlichen Umweltschutzvorschriften erfordern den Übergang von Einweg- auf Mehrweggebinde wie beispielsweise Fässer aus Kunststoff oder Stahl, die Umstellung auf Gebinde mit größerem Volumen mit dem Ziel einer Verringerung der Restmengen und die Entwicklung neuer Mehrweggebinde, die im Hinblick auf eine Entlastung der Umwelt von schädlichen Stoffen rekonditioniert und für die Rekonditionierung sowie für eine ordnungsgemäße Entsorgung durch eine schadstofffreie Vernichtung z.B. durch Verbrennen oder für eine Wiederaufbereitung des Herstellungsmaterials optimal restentleert und leicht gereinigt werden können.

Die Entwicklung von rekonditionierbaren und entsorgungsfreundlichen, gegen eine Kontaminierung durch Schadstoffe geschützten Hartgebinden, im wesentlichen Fässern aus Kunststoff und Stahl, führte zu den aus der DE 35 39 656 A1 bekannten Deckelspundfässern, die zum Teil die bisher eingesetzten geschlossenen Spundfässer ersetzen. Diese Fässer werden nach Bedarf mit einer als Inliner bezeichneten flexiblen Innenhülle bzw. einem Sack aus einer Kunststoffolie, z.B. einer Polyethylenfolie, oder aus einer diffusionsfesten, koextrudierten Metall-Kunststoffverbundfolie, z.B. einer beidseitig mit Polyethylen kaschierten Aluminiumfolie ausgestattet. Fässer mit einem Inliner sind z.B. aus der DE 88 10 760 U1 bekannt. Die Inliner finden bei Kunststoff- und Stahlfässern Anwendung, wenn in diese entsorgungsproblematische Produkte wie Dispersionen, z.B. Farben, gefüllt werden, die nach dem Trocknen kaum mehr von der Faßwand zu entfernen sind. Inliner aus einer diffusionsfesten Verbundfolie unterbinden bei Kunststoffässern die Diffusion von lösungsmittelhaltigem Füllgut in die Faßwand und eine mögliche Rückdiffusion von Lösungsmitteln aus einer Faßwand. Bei Stahlfässern erspart der Inliner die bisher zum Schutz des Stahlblechs gegen aggressive Medien und Korrosion erforderliche Innenlackierung.

Aus der EP-A-0 703 064 ist ein Verfahren gemäß dem Oberbegriff des Anspruchs zum Rekonditionieren von genormten, einteilig durch Blasformen hergestellten Spundfässern für einen erneuten Einsatz als Spundfässer oder für eine Verwendung als Deckelfässer bekannt.

Bei diesem Rekonditionierverfahren wird zunächst der obere Boden, der einen Einfüll- und Entnahmespund und einen Be- und Entlüftungsspund aufweist, zusammen mit dem oberen, für das Ansetzen eines Faßgreifers ausgebildeten Tragring, der ein L-förmiges Querschnittsprofil aufweist, quer zur Faßlängsachse vom Faßkörper des Spundfasses maschinell abgetrennt. Danach wird der durch das Abtrennen des oberen Bodens gebildete ringförmige Schnittrand des Faßkörpers glatt geschält bzw. gefräst. Nach dem Reinigen des Faßkörpers wird dessen Schnittrand kalibriert. Dazu wird der Faßkörper mit dem für eine Schweißung bearbeiteten Schnittrand auf einen Kalibrierdorn aufgeschoben und im Bereich des Schnittrandes erhitzt, derart, daß der Faßkörper beim anschließenden Abkühlen mit dem Schnittrandabschnitt paßgenau auf den Kalibrierdorn aufschrumpft. Darauffolgend wird der Faßkörper von dem Kalibrierdorn abgezogen, und auf den kalibrierten Schnittrand des Faßkörpers wird mittels eines Heizspiegels ein spritzgegossener Halsring aus Kunststoff mit einer am unteren Rand radial nach außen vorstehenden, umlaufenden Bordur zur Herstellung eines Weithals-Deckelfasses aufgeschweißt. Nach dem Glätten der Schweißnaht zwischen dem Faßkörper und dem Halsring mit einem Fräs- oder Schälwerkzeug und einer Dichtheitsprüfung des Faßkörpers wird auf dem Halsring ein spritzgegossener Weithalsfaßdeckel mit einem Spannring befestigt, der einen am unteren Rand des Faßdeckels angeformten Deckelflansch übergreift und die Bordur des Halsringes untergreift.

Bei einer Rekonditionierung der Spundfässer für eine Weiterverwendung als Spundfässer wird nach dem Abtrennen des oberen Bodens vom Faßkörper auf den kalibrierten Schnittrand des Faßkörpers ein neuer oberer Boden mit einem Einfüll- und Entnahmespund und einem Be- und Entlüftungsspund sowie einem Tragring aufgeschweißt.

Diese bekannten Rekonditionierverfahren sind für Massenprodukte wie Fässer von der Technik her verhältnismäßig aufwendig und dementsprechend kostenintensiv.

Aus WO-A-9303971 und WO-A-9608416 sind Verfahren zum Rekonditionieren von gebrauchten, gefertigten Spundfässern zu Deckelfässern bekannt, wobei der Oberboden der Spundfässer durch einen zur Faßachse konzentrischen Kreisschnitt aus den Spundfaßkörpern herausgeschnitten wird, derart, daß der obere Tragring stehenbleibt und den Öffnungsrand am Faßhals des Deckelfaßkörpers bildet, und danach ein einfacher Deckel oder ein Spunddeckel mit Dichtung auf dem Öffnungsrand des Deckelfaßkörpers mittels eines Spannringes befestigt wird.

Die mit der vorliegenden Erfindung zu lösende Aufgabe wird darin gesehen, ein Verfahren zum Rekonditionieren von gebrauchten, mit einem Wasserablaufloch bzw. mehreren Wasserablauflöchern versehenen Spundfässern anzugeben.

Diese Aufgabe wird erfindungsgemäß gelöst durch das Rekonditionierverfahren mit den Merkmalen und Verfahrensschritten des Patentanspruchs.

Das erfindungsgemäße Rekonditionierverfahren, bei dem gebrauchte Spundfässer mit Wasserablauflöchern durch Herausschneiden des Oberbodens zu Deckelfässern umgerüstet werden, ist technisch sehr einfach und dementsprechend äußerst wirtschaftlich.

Das Herstellungsverfahren und das Rekonditionierverfahren für Kunststoffässer gemäß der Erfindung ist nachstehend anhand von Zeichnungsfiguren erläutert, die folgendes darstellen:
- Fig. 1: eine Teilansicht und eine teilweise Längsschnittdarstellung eines blasgeformten Spundfasses,
- Fig. 2: einen vergrößerten Ausschnitt des Oberbodens des Spundfasses mit dem Füll- und Entleerspund,
- Fig. 3: einen vergrößerten Ausschnitt des Oberbodens des Spundfasses mit einem an dessem Tragring angesetzten Faßgreifer,

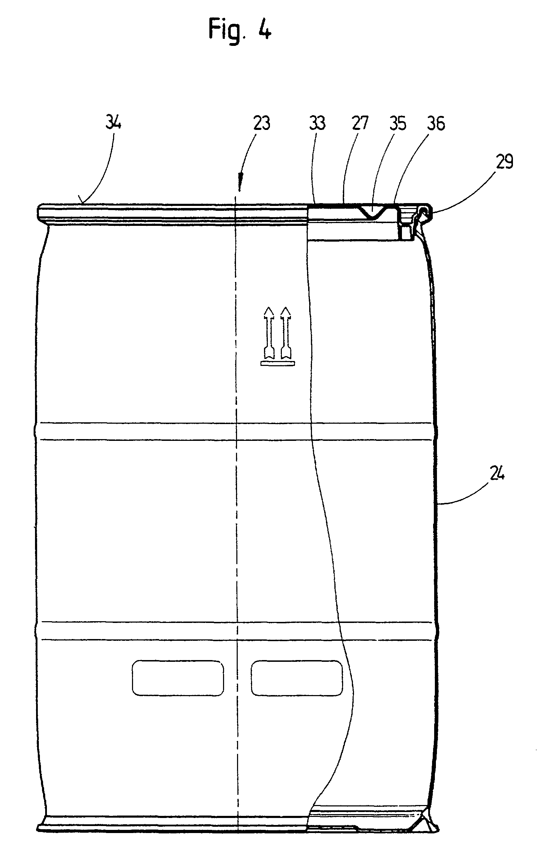

- Fig. 4: eine Teilansicht und eine teilweise Längsschnittdarstellung eines aus dem Spundfaß nach den Fign. 1-3 hergestellten Deckelfasses und

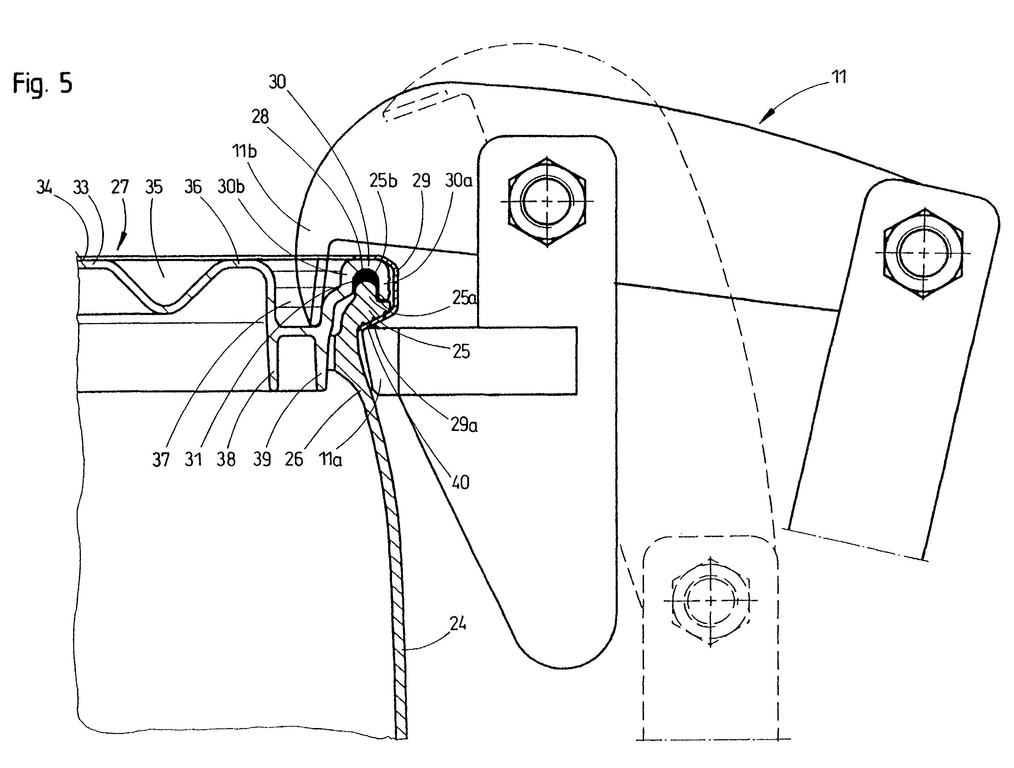

- Fig. 5: einen vergrößerten Ausschnitt des oberen Randbereiches des Deckelfasses nach Fig. 4 mit einem aufgespannten einfachen Deckel und einem angesetzten Faßgreifer.

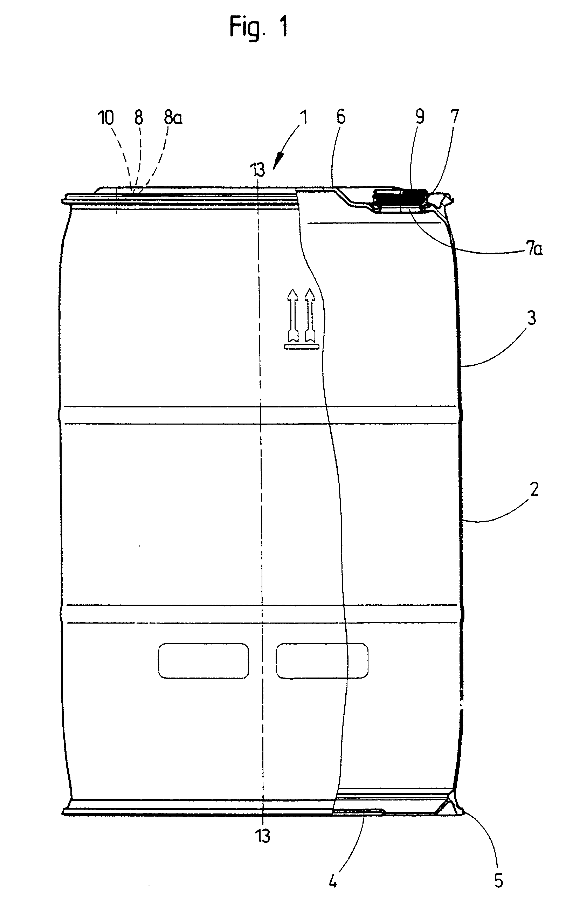

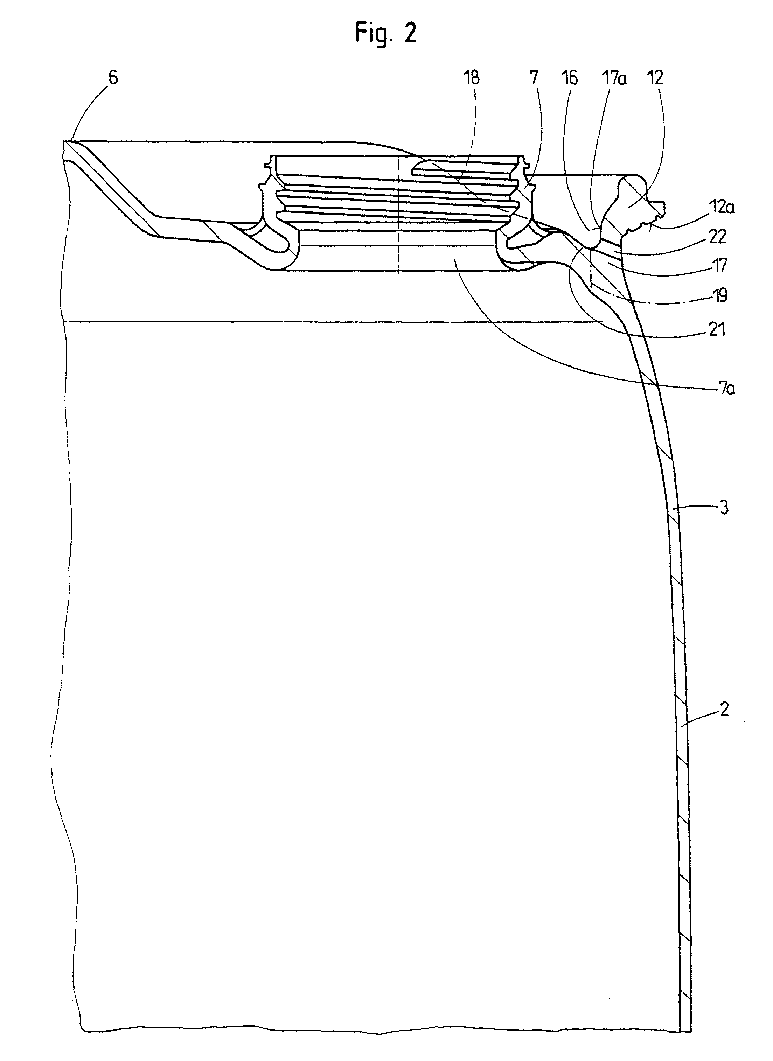

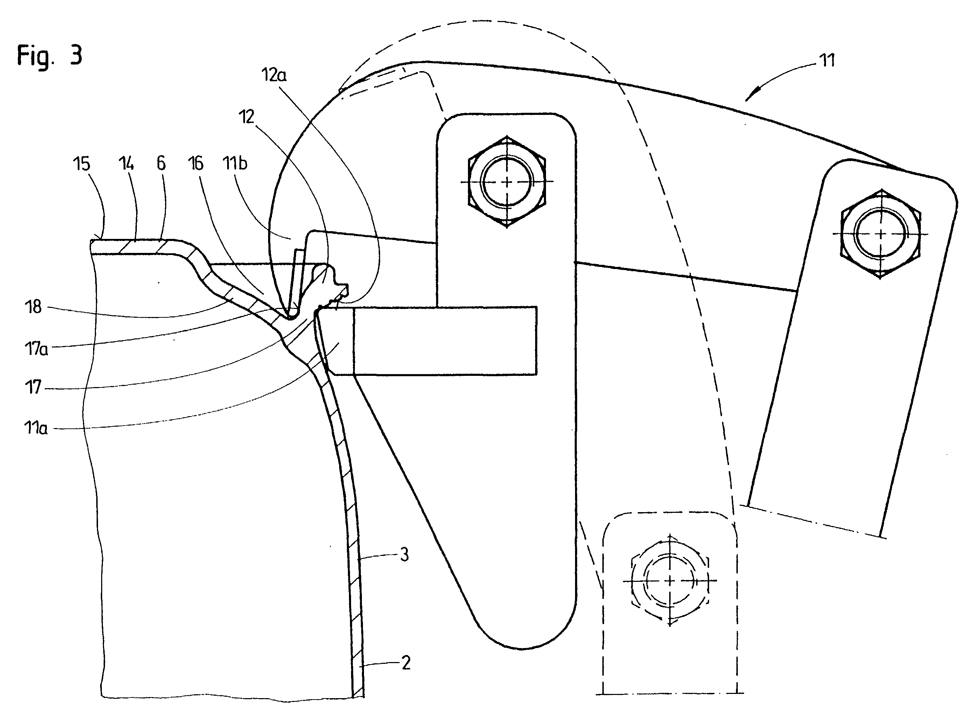

Das einteilig blasgeformte Spundfaß 1 aus Kunststoff nach den Fign. 1-3 besteht aus einem Faßkörper 2 mit einem zylindrischen Faßmantel 3, einem Unterboden 4, einem Fußring 5, einem Oberboden 6 mit einem Füll- und Entleerspund 7 und einem Be- und Entlüftungsspund 8, die versenkt im Oberboden 6 angeordnet sind und deren Öffnungen 7a, 8a, durch als Schraubstopfen ausgebildete Spundstopfen 9, 10 verschließbar sind, sowie mit einem oberen, für das Ansetzen eines Faßgreifers 11 ausgebildeten Tragring 12, der ein L-förmiges Querschnittsprofil aufweist.

Der Oberboden 6 weist eine in Richtung der Faßachse 13-13 über den Tragring 12 nach oben vorgezogene Bodenscheibe 14 mit einer Stapelfläche 15 sowie einen konzentrisch zur Faßachse 13-13 verlaufenden Ringkanal 16 auf. Der Ringkanal 16 wird von dem Tragring 12 und einem Übergangsabschnitt 17 zwischen Tragring 12 und Faßmantel 3 einerseits und einem nach oben gewölbten Abschnitt 18 des Oberbodens 6 andererseits gebildet, der 18 in die zentrale Bodenscheibe 14 übergeht.

Bei der Herstellung des Spundfasses 1 wird bzw. werden nach dem Abkühlen des blasgeformten Spundfaßkörpers 2 vom Grund 21 des Ringkanals 16 ein Wasserablaufloch 22 oder mehrere Wasserablauflöcher durch den Übergangsabschnitt 17 zwischen Tragring 12 und Faßmantel 3 mit Gefälle zur Außenseite des Spundfaßkörpers 2 gebohrt.

Der Faßgreifer 11 greift mit einer Klaue 11a an der schräg nach unten zum Faßmantel 3 gerichteten Unterkante 12a des Tragringes 12 an und greift mit der anderen Klaue 11b in den Ringkanal 16 ein, wobei sich die Klaue 11b an die Innenseite 17a des Übergangsabschnitts 17 zwischen Tragring 12 und Faßmantel 3 anlegt.

Zur Herstellung von Deckelfässern 23 wird der Oberboden 6 durch einen zur Faßachse 13-13 konzentrischen Kreisschnitt 19 aus den abgekühlten Spundfaßkörpern 2 herausgeschnitten, derart, daß der obere Tragring 12 stehenbleibt und den Öffnungsrand 25 am Faßhals 26 der Deckelfaßkörper 24 bildet.

Anschließend wird auf dem Öffnungsrand 25 der Deckelfaßkörper 24 ein einfacher Deckel 27 oder ein Spunddeckel mit Dichtung 28 mittels eines Spannringes 29 befestigt.

Der spritzgegossene Faßdeckel 27 aus Kunststoff besitzt einen Deckelrand 30, der durch einen Außenrand 30a und einen Innenrand 30b gebildet wird, die eine nach unten offene Ringnut 31 begrenzen, in die die Deckeldichtung 28 eingeschäumt oder eingelegt ist. Der zentrale Bereich des Faßdeckels 27 wird durch eine Deckelscheibe 33 mit einer Stapelfläche 34 gebildet, die von einer Ringnut 35 eingefaßt ist, an die sich ein Deckelring 36 anschließt. Zwischen dem Deckelrand 30 und dem Deckelring 36 ist ein Ringkanal 37 mit einem U-förmigen Querschnittsprofil ausgebildet. Auf der Unterseite des Faßdeckels 27 sind unter dem Ringkanal 37 zwei konzentrisch zur Faßachse 13-13 verlaufende Ringstege 38, 39 zur Versteifung des Faßdeckels 27 angeformt.

Beim Aufsetzen des Faßdeckels 27 auf den Öffnungsrand 25 des Deckelfaßkörpers 24 greift der in Richtung der Faßachse 13-13 nach oben vorstehende Ringsteg 25a des Öffnungsrandes 25 in die Ringnut 31 des Faßdeckels 27. Beim Festziehen des Spannringes 29, der den Deckelrand 30 übergreift und die Unterkante 40 des Öffnungsrandes 25 des Deckelfaßkörpers 24 untergreift, wird die Deckeldichtung 28 gegen die Dichtfläche 25b des Ringsteges 25a des Öffnungsrandes 25 verspannt.

Beim Anheben des Deckelfasses 23 mit einem Faßgreifer 11 greift eine Klaue 11a desselben an der Unterkante 29a des Spannringes 29 an, und die andere Klaue 11b des Greifers 11 greift in den Ringkanal 37 des Faßdeckels 27 und legt sich an den Innenrand 30b des Deckelrandes 30 an.

Gebrauchte Spundfässer 1 können derart rekonditioniert werden, daß der Oberboden 6 durch einen zur Faßachse 13-13 konzentrischen Kreisschnitt 19 aus den Spundfaßkörpern 2 herausgeschnitten wird, derart, daß der obere Tragring 12 stehenbleibt und den Öffnungsrand 25 am Faßhals 26 der Deckelfaßkörper 24 bildet, anschließend das Wasserablaufloch 22 bzw. die Wasserablauflöcher im Bereich des Öffnungsrandes 25 der Deckelfaßkörper 24 zugeschweißt wird bzw. werden und danach ein einfacher Deckel 27 oder ein Spunddeckel mit Dichtung 28 auf dem Öffnungsrand 25 der Deckelfaßkörper 24 mittels eines Spannringes 29 befestigt wird.

## Patentansprüche

1. Verfahren zum Rekonditionieren von gebrauchten, blasgeformten Kunststoff-Spundfässern zu Deckelfässern, wobei das Spundfaß (1) einen zylindrischen Faßmantel (3), einen Unterboden (4) und einen Oberboden (6) mit mindestens einem Spund (7) sowie einen oberen, für das Ansetzen eines Faßgreifers (11) ausgebildeten Tragring (12) mit L-förmigem Querschnitt aufweist, wobei im Bereich des Tragrings (12) mindestens ein Wasserablaufloch (22) mit Gefälle nach außen vorgesehen ist, wobei der Oberboden (6) des Spundfasses (1) durch einen zur Faßachse (13-13) konzentrischen Kreisschnitt (19) herausgeschnitten wird und danach in an sich bekannter Weise ein einfacher Deckel (27) oder ein Spunddeckel mit Dichtung (28) auf dem Öffnungsrand (25) des Deckelfasses (24) mittels eines Spannringes (29) befestigt wird **dadurch gekennzeichnet daß** der obere Tragring (12) nach der Herausschneidung des Oberbodens (6) stehenbleibt und den Öffnungsrand (25) am Faßhals (26) bildet, wobei anschließend das Wasserablaufloch (22) bzw. die Wasserablauflöcher im Bereich des Öffnungsrandes (25) des entstandenen Deckelfasses zugeschweißt wird bzw. werden.

## Claims

1. Method for reconditioning used, blow-moulded, plastic material bunghole barrels into lid covered barrels, the bunghole barrel (I) having a cylindrical barrel casing (3), a lower base (4) and an upper base (6) with at least one bunghole (7) and an upper carrier ring (12) which has an L-shaped cross-section and is configured for attaching a barrel gripper (11), at least one water discharge hole (22) with a gradient towards the exterior being provided in the region of the carrier ring (12), the upper base (6) of the bunghole barrel (1) being cut out by means of a circular cut (19) which is concentric to the barrel axis (13 - 13), and thereafter a simple cover (27) or a bunghole cover with a seal (28) being secured on the opening edge (25) of the lid covered barrel (24) by means of a tensioning ring (29) in a manner known per se, **characterised in that** the upper carrier ring (12) remains after the cutting-out of the upper base (6) and forms the opening edge (25) at the barrel neck (26), subsequently the water discharge hole (22) or the water discharge holes being welded up in the region of the opening edge (25) of the resulting lid covered barrel.

## Revendications

1. Procédé pour le reconditionnement en fûts à couvercle de fûts à bonde usagés formés par soufflage en matière plastique, le fût (1) à bonde comportant une enveloppe (3) de fût cylindrique, un fond (4) inférieur et un fond (6) supérieur doté d'au moins une bonde (7), ainsi qu'une bague (12) porteuse supérieure à section en L, conçue pour l'application d'un preneur (11) de fût, au moins un trou (22) d'évacuation d'eau à pente descendante vers l'extérieur étant prévu dans la région de la bague (12) porteuse, le fond (6) supérieur du fût (1) à bonde étant découpé par une découpe (19) circulaire concentrique à l'axe (13-13) du fût, puis, d'une manière en soi connue, un simple couvercle (27) ou un couvercle de fût à garniture (28) d'étanchéité étant fixé sur le bord (25) d'ouverture du fût (24) à couvercle au moyen d'une bague (29) de serrage,
**caractérisé en ce que** la bague (12) porteuse supérieure reste en place après le découpage du fond (6) supérieur et forme le bord (25) d'ouverture sur le col (26) du fût, le trou (22) d'évacuation d'eau ou selon le cas les trous d'évacuation d'eau dans la région du bord (25) d'ouverture du fût à couvercle obtenu étant ensuite bouché(s) par soudage.
